# EUROPÄISCHE PATENTSCHRIFT

(11) **EP 2 098 394 B1**
(45) Veröffentlichungstag und Bekanntmachung des Hinweises auf die Patenterteilung: **08.06.2011**
(21) Anmeldenummer: 09153250.7
(22) Anmeldetag: 19.02.2009
(51) Int. Cl.: B60J 7/00

(54) **Rolloanordnung, insbesondere Sonnenschutz-Rolloanordnung für ein Fahrzeug**
Roller blind assembly, in particular sun roller blind assembly for a vehicle
Agencement de store, notamment agencement de store à protection solaire pour un véhicule

(30) Priorität: 03.03.2008 DE 102008012326
(43) Veröffentlichungstag der Anmeldung: 09.09.2009
(73) Patentinhaber: Webasto AG, 82131 Stockdorf (DE)
(72) Erfinder: Rockelmann, Andreas, 81249, München (DE); Kraus, Thomas, 86916, Kaufering (DE); Hölzel, Dominik, 82194, Gröbenzell (DE); Harnischfeger, Bernhard, 85221, Dachau (DE); Thalhammer, Marco, 81827, München (DE)
(74) Vertreter: Epping - Hermann - Fischer

(56) Entgegenhaltungen:
- WO-A-00/50723
- WO-A-03/008235
- DE-U1-202006 005 498

## Beschreibung

Die Erfindung betrifft eine Rolloanordnung, insbesondere ein Sonnenschutzrollo für ein Fahrzeug, mit einer aufwickelbaren Rollobahn mit einem Zugspriegel und einer Antriebsvorrichtung zur Betätigung des Zugspriegels.

Eine derartige Rolloanordnung ist beispielsweise aus der DE 19834777 C2 bekannt. Bei der dort gezeigten Antriebsvorrichtung wird ein parallel zur Rollobahn geführtes Antriebselement verwendet, welches mit dem Zugspriegel verbunden ist. Das Antriebselement wird von einem Motor betätigt, so dass der Zugspriegel durch die Motorkraft verschoben werden kann. Nachteilig bei dieser Anordnung wie auch bei anderen Anordnungen, die mit Steigungskabeln, Seilsystemen oder Zahnriemen arbeiten, ist die verhältnismäßig komplizierte Mechanik. Für Steigungskabel werden Antriebskanäle in Führungsschienen und Rahmenteilen benötigt. Alternativ können Rohrsysteme mit Hirschgeweih und Auslaufrohren vorgesehen werden. Für Seilsysteme und Zahnriemen werden Anbauteile benötigt, um die Antriebssysteme zu führen. Dies bedeutet einen hohen Raumbedarf und verhältnismäßig hohe Kosten durch die hohe Teilezahl und die Montage vielen Komponenten.

Aus der WO 00/50723 A ist eine mototisch betriebene Fensterabschattung bekannt. Zur Stromversorgung des Motors wird ein Kabelbündel verwendet, welches mit dem Motor bewegt wird.

Die WO 03/008235 A1 offenbart eine Laderaumabdeckung, bei der Stromschienen vorgesehen sind, die sich seitlich im Bereich einer Führungsschiene erstrecken. Über Schleifkontakte wird einem Motor der Laderaumabdeckung ein Strom zugeführt.

Es ist Aufgabe der Erfindung, eine elektrisch betätigbare Rolloanordnung anzugeben, die einen einfacheren Aufbau besitzt.

Diese Aufgabe wird durch eine Rolloanordnung gemäß Anspruch 1 gelöst. Bei dieser ist mindestens ein Motor der Antriebsvorrichtung mit dem Zugspriegel fest verbunden, so dass er gemeinsam mit dem Zugspiegel gegenüber einem dachfesten Teil verschiebbar ist, und mindestens eine Antriebswelle der Antriebsvorrichtung ist dazu vorgesehen, mit dem dachfesten Teil zusammenzuwirken zur Verschiebung des Zugspriegels gegenüber dem dachfesten Teil.

Während bei den Anordnungen nach dem Stand der Technik ein Motor ortsfest an dem Dach montiert wird und die Antriebsleistung über eine Mechanik auf den verschiebbaren Zugspriegel übertragen wird, erfolgt der erfindungsgemäße Ansatz umgekehrt. Der Motor ist als Teil der Antriebsvorrichtung auf dem verschiebbaren Zugspriegel montiert und wird mit diesem mitbewegt. Die Antriebsvorrichtung wirkt beispielsweise über eine Antriebswelle mit dachfesten Teilen zusammen, um so den Zugspriegel gegenüber dem festen Dachteil zu verschieben.

Ein Vorteil der erfindungsgemäßen Rolloanordnung ist, dass die Antriebsvorrichtung mechanisch sehr einfach ausgestaltet werden kann. Im einfachsten Fall genügt eine Achse mit zwei Zahn- oder Reibrädern an ihren freien Enden, wobei die Achse von dem Motor angetrieben wird. Vorzugsweise ist der Motor dabei mittig an dem Zugspriegel angeordnet. Dadurch ist der Antrieb auf beiden Seiten besonders gleichmäßig. In einer weitergebildeten Ausführung weist eine Antriebswelle zwei Halbachsen auf, die mit einem Getriebe verbunden sind, welches zusammen mit dem Motor an dem Zugspriegel angeordnet ist.

In einer anderen vorteilhaften Weiterbildung der Erfindung sind zwei Motoren vorgesehen, die zum Antrieb zweier Antriebswellen vorgesehen sind. Jede dieser Antriebswellen wirkt auf je einer Seite der Rolloanordnung mit einem dachfesten Teil zusammen zur Betätigung des Zugspriegels. Eine Steuereinheit sorgt dafür, dass ein synchroner Antrieb des Zugspriegels möglich ist. Alternativ kann auch eine mechanische Synchronisierung der beiden Antriebswellen vorgesehen werden.

Erfindungsgemäße Ausgestaltungen von Stromzuführungen umfassen Stromzuführungsleitungen, die in oder an der Rollobahn geführt sind. So lassen sich beispielsweise in den Randbereichen Leitungen in den Stoff integrieren, indem sie eingenäht, eingeklebt oder eingeschweißt werden. Die Drähte werden zusammen mit der Rollobahn aufgewickelt.

Ein besonderer Vorteil der erfindungsgemäßen Anordnung ist, dass das Rollo zusammen mit den Motoren als Modul ausgewechselt werden kann. Eine defekte Rolloanordnung kann so sehr einfach ersetzt werden, ohne dass eine komplizierte mechanische Verbindung gelöst und später wieder hergestellt werden muss.

Weitere vorteilhafte Ausgestaltungen der Erfindung sind in den Unteransprüchen angegeben.

Die Erfindung wird nachfolgend anhand von Ausführungsbeispielen näher erläutert. Es zeigt:
- Figur 1: ein erstes Ausführungsbeispiel einer erfindungsge- mäßen Rolloanordnung mit Reibrädern,
- Figur 2: eine erfindungsgemäße Rolloanordnung mit in die Rollobahn eingearbeiteten Stromzuführungsleitungen,
- Figur 3: eine erfindungsgemäße Rolloanordnung mit Stromüber- tragung mittels Gleitern und
- Figur 4: ein Ausschnitt aus einer erfindungsgemäßen Dachan- ordnung, die eine Rolloanordnung umfasst, mit einem Zahnrad/Zahnstangen-Antrieb.

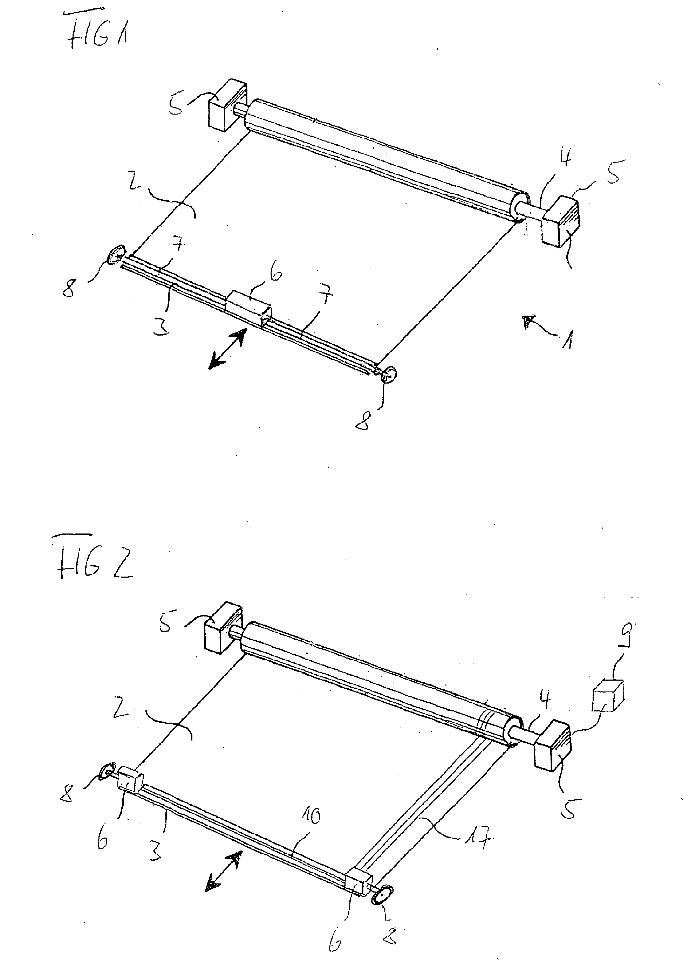

In der Figur 1 ist eine Rolloanordnung 1 mit einer aufwickelbaren Rollobahn 2 dargestellt. An dem freien Ende ist die Rollobahn 2 mit einem Zugspriegel 3 versehen, über den die Rollobahn betätigt werden kann. Im Ausführungsbeispiel von Figur 1 ist die Rollobahn auf eine Wickelwelle 4 aufgewickelt. Es gibt jedoch auch wellenlose Rollosysteme, die ebenfalls eingesetzt werden können. Die Wickelwelle 4 ist durch zwei Lagerblöcke 5 gehalten, die mit dachfesten Teilen verbunden sind bzw. dachfeste Teil bilden. Ein nicht dargestellter Federmechanismus sorgt dafür, dass sich die Rollobahn 2 bei Bewegung des Zugspriegels in Richtung der Wickelwelle 4 selbsttätig aufwickelt.

Die Betätigung des Zugspriegels 3 erfolgt nach der Erfindung mittels eines Elektromotors 6, welcher an dem Zugspriegel 3 befestigt ist. Vorzugsweise ist der Motor 6, wie in Figur 1 dargestellt, mittig an dem Zugspriegel 3 angeordnet. Er könnte aber ebenso in einem anderen Bereich des Zugspriegels 3 angeordnet sein. Eine mittige Anordung ermöglich einen gleichmäßigen Antrieb beider Seiten des Zugspriegels 3, weil zu beiden Seiten hin die gleichen mechanischen Randbedingungen bestehen. So kann eine verhältnismäßig starke Torsion der Antriebswelle 7 in Kauf genommen werden. Da sie sich auf beiden Seiten gleich auswirkt, kommt es nicht zu einem ungleichmäßigen Antrieb, welcher beispielsweise eine Faltenbildung bewirken oder sogar zu einem Verkanten des Zugspriegels 3 führen könnte. Die Antriebswelle 7 kann dadurch gewichtsreduziert ausgeführt werden. An der Antriebswelle 7 ist zum Beispiel in der Mitte ein Zahnrad vorgesehen, in das ein Antriebsritzel des Motors 3 oder eines nachgeschalteten Getriebes eingreift. Die mittige Anordnung des Motors 6 ist demnach so zu verstehen, dass der Antrieb des Motors im mittleren Bereich des Zugspriegels 3 bzw. der Antriebswelle 7 auf diese einwirkt. Bei dem in Figur 1 dargestellten Ausführungsbeispiel ist eine Antriebswelle 7 vorgesehen, welche sich zu den Seiten des Zugspriegels 3 erstreckt. In den Endbereichen der Antriebswelle 7 sind Reibräder 8 vorgesehen, welche mit Führungsschienen eines dachfesten Teils zusammenwirken. Die in Figur 1 schematisch dargestellte Antriebswelle 7 wird in einer konkreten Ausführung der Erfindung in einem Rohr geführt. Statt einer starren Antriebswelle kann auch eine flexible Welle eingesetzt werden, die in einer Hülle geführt ist.

Bei dem Ausführungsbeispiel von Figur 2 sind zwei Motoren 6 vorgesehen, je ein Motor für den Antrieb des Zugspriegels 3 auf einer Seite der Rollobahn 2. Die Motoren 6 sind dabei im Bereich der seitlichen Ränder des Zugspriegels 3 angeordnet, so dass Reibräder 8 direkt auf einer Motorwelle angeordnet werden können.

Die Stromversorgung der Motoren 6 erfolgt über Leitungen 17, die in den Rollo-Stoff eingearbeitet sind. Die Leitungen sind flexibel, so dass sie problemlos mit aufgewickelt werden können. Die Anschlüsse der Leitungen werden im Innern der Wickelwellen 4 zu den Lagerblöcken 5 geführt und von dort aus mit einer Steuervorrichtung 9 verbunden. In den Lagerblöcken wird eine Verbindung zwischen den stationären Kontakten und den drehenden Leitungen 17 hergestellt. Dies kann über Schleifkontakte, kontaktlos über eine induktive Kopplung oder durch ein Verdrehen von flexiblen Leitungen erfolgen.

Auf Seiten des Zugspriegels 3 kommen die Leitungen 17 im Bereich des einen Motors 6 an und werden in oder an dem Zugspriegel 3 auch zu dem anderen Motor 6 geführt.

In der schematischen Darstellung von Figur 2 sind nur drei Leitungen gezeigt, was genügen würde, um die beiden Motoren 6 getrennt voneinander anzusteuern. Selbstverständlich wäre es auch möglich, die Motoren 6 gemeinsam anzusteuern, wobei dann nur zwei Leitungen erforderlich wären. Für die uni- oder bidirektionale Übermittlung zusätzlicher Sensor- oder Steuersignale könnten auch mehr als drei Leitungen vorgesehen werden.

Insbesondere für die Synchronisierung der Bewegung des rechten und linken Teils des Zugspriegels 3 ist eine elektronische Synchronisierung der beiden Motoren 6 von Vorteil. Eine derartige Synchronisierung wird in der Anordnung von Figur 2 durch die Steuereinheit 9 durchgeführt, indem die Motoren 6 unabhängig voneinander angesteuert werden. Die Steuereinheit könnte auch auf dem Zugspriegel angeordnet, insbesondere in ein Motorgehäuse integriert werden.

Insbesondere bei der Ausführung mit Reibrädern 8 ist ein gewisser Schlupf, insbesondere bei Verunreinigungen der Führungsschiene, nicht auszuschließen. In einer Weiterbildung dieses Ausführungsbeispiels sind deshalb nicht dargestellte Positionssensoren vorgesehen, um eine ungleichmäßige Bewegung des rechten und linken Endes des Zugspriegels festzustellen, so dass die Motoren 6 mit Hilfe der Steuereinrichtung 9 entsprechend angesteuert werden können.

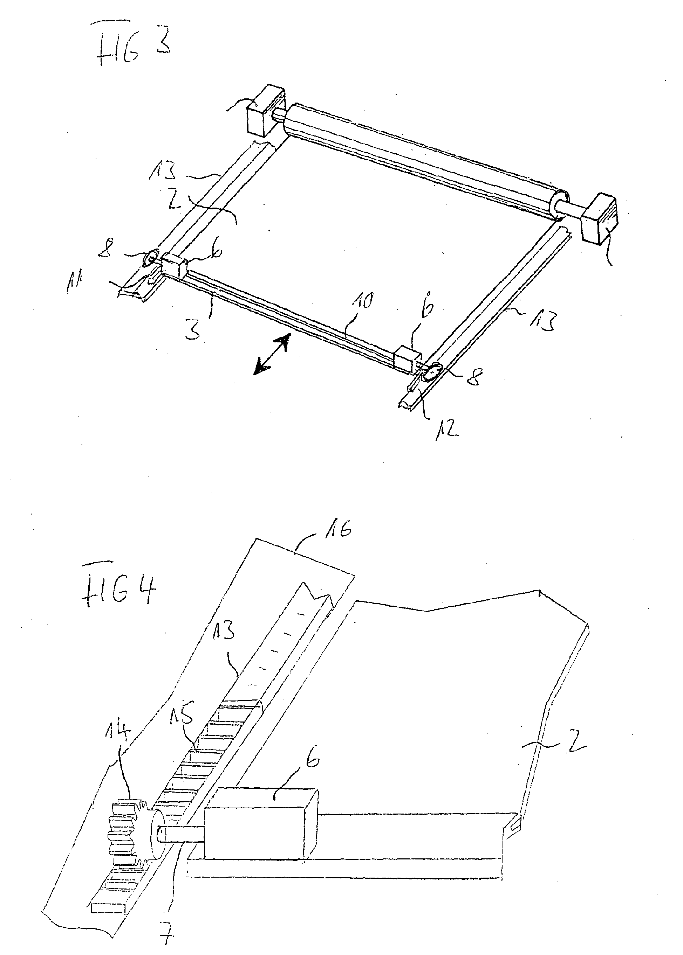

Die Rolloanordnung von Figur 3 ähnelt der Ausführung von Figur 2, jedoch erfolgt die Stromzuführung über zwei Gleiter 11 und 12, die rechts und links des Zugspriegels 3 angeordnet sind und gehört nicht zur Erfindung. Sie stehen dort mit Führungsschienen 13 eines dachfesten Teils 16, beispielsweise eines Rahmenteils, in Verbindung. Die Gleiter 11 und 12 sind elektrisch leitend ausgebildet, so dass mit einer Stromschiene auch eine elektrische Verbindung hergestellt werden kann. Im dargestellten Ausführungsbeispiel wird über den linken Gleiter 11 eine positive Versorgungsspannung abgegriffen, die über eine separate Stromschiene 18 bereitgestellt wird, die von dem übrigen Rahmen isoliert ist. Über den rechten Gleiter 12 wird eine Masseverbindung hergestellt. Die Leitungen 10 auf dem Zugspriegel sorgen für eine Weiterführung der jeweiligen Potentiale zu dem anderen Motor 6.

In Abwandlung der Rolloanordnung von Figur 3 könnten auch auf beiden Seiten zweipolige Verbindungen hergestellt werden, so dass eine redundante Stromversorgung möglich wäre. Bei zweipoligen Verbindungen auf mindestens einer Seite könnte eine getrennte Ansteuerung der beiden Motoren 6 erfolgen.

In weiteren Abwandlungen der gezeigten Rolloanordnung, die nicht dargestellt sind, und auch nicht zur Erfindung gehören könnte eine Energieübertragung über Induktion erfolgen. Dazu würde sowohl im Bereich der Führungsschiene als auch im Bereich des Zugspriegels 3 eine Leiterschleife vorgesehen werden. Der führungsschienenseitigen Leiterschleife wird dann ein Wechselstrom zugeführt, so dass in der zugspriegelseitigen Leiterschleife eine Spannung induziert wird, welche zum Betrieb der Motoren 6 verwendet werden kann.

In einer einfacheren Abwandlung, die auch nicht zur Erfindung gehört, wird seitlich der Rollobahn 2 ein separater Kabelstrang geführt, welcher sich beim Aufwickeln der Rollobahn 2 als Schleife zusammenlegt. In diesem Fall würde eine Stromzuführung nur auf einer Seite der Rollobahn 2 erfolgen.

Das bereits angesprochene Schlupfproblem kann bei Ausführungen mit Reibrädern 8 dadurch verringert werden, dass die Oberflächen der Führungsschienen 13 behandelt werden, beispielsweise aufgeraut oder mit einer Gummibeschichtung versehen werden. Dadurch wird ein schlumpffreier Antrieb sichergestellt und ein synchrones Arbeiten der beiden Reibräder 8 ermöglicht.

Die Figur 4 zeigt ein Detail einer erfindungsgemäßen Dachanordnung mit einem Rollo 2, bei welcher der Antrieb über eine Zahnradanordnung erfolgt. Statt der Reibräder 8, wie sie in den vorhergehenden Ausführungsbeispielen gezeigt wurden, sind bei dem Ausführungsbeispiel von Figur 4 die Antriebswellen 7 mit einem Zahnrad 14 verbunden. Auf Seiten der Führungsschiene 13 ist eine Zahnstangenanordnung 15 ausgebildet, mit der das Zahnrad 14 zusammenwirken kann. Die Zahnrad/Zahnstangenanordnung ist zwar aufwendiger als eine Reibradanordnung, jedoch arbeitet sie nahezu verschleißfrei, ist weniger schmutzempfindlich und vereinfacht daher die Synchronisierung zwischen dem linken und rechten Antrieb des Zugspriegels.

Bei allen beschriebenen Ausführungsformen der Erfindung kommt als dachfestes Teil insbesondere der Rahmen eines öffnungsfähigen Fahrzeugdachs in Frage. Andere Dachanordnungen, bei denen eine erfindungsgemäße Rolloanordnung angewendet werden könnte, sind Glasdächer in Fahrzeugen oder auch Glasdächer in Gebäuden, insbesondere in Wintergärten oder Hausdächern. Diese sind oftmals so hoch angeordnet, dass sie nicht von Hand bedient werden können, so dass ein elektrischer Antrieb, der nach der Erfindung sehr einfach ausgeführt werden kann, dort ebenfalls vorteilhaft eingesetzt werden kann. Die Rollobahnen müssen nicht notwendigerweise dem Sonnenschutz dienen, auch beispielsweise Mückenschutzgitter können vorteilhaft durch einen erfindungsgemäßen Antrieb betätigt werden.

Als Führungsschienen kommen Metall- oder Kunststoffschienen in Frage.

Die Lagerung des Zugspriegels kann über die beschriebenen Gleiter oder über die Motorachse erfolgen. Der Vorteil der Lagerung über Gleiter besteht darin, dass die Wellen entsprechend schwächer oder flexibel ausgelegt werden können, so dass die Zugspriegelanordnung kleiner wird.

Die Erfindung ist nicht auf die angegebenen Ausführungsbeispiele beschränkt. Insbesondere können auch andere form- oder reibschlüssige Verbindungen zur Führungsschiene vorgesehen werden. Weitere Möglichkeiten der Stromzuführung erfolgen über Metallbänder oder Rollfedern, die zwischen Zugspriegel und Führungsschiene angeordnet sind. Jede der gezeigten Stromzuführungsanordnungen können einseitig oder auch beidseitig im Bereich der Führungsschienen angeordnet werden.

### Bezugszeichenliste

- 1: Rolloanordnung
- 2: Rollobahn
- 3: Zugspriegel
- 4: Wickelwelle
- 5: Lagerblock
- 6: Motor
- 7: Antriebswelle
- 8: Reibrad
- 9: Steuereinheit
- 10: Leitungen im Zugspriegel
- 11: Gleiter
- 12: Gleiter
- 13: Führungsschiene
- 14: Zahnrad
- 15: Zahnstangenanordnung
- 16: Rahmenteil
- 17: Leitungen im Rollo-Stoff

## Patentansprüche

1. Rolloanordnung (1), insbesondere Sonnenschutz-Rolloanordnung für ein Fahrzeug, mit einer aufwickelbaren Rollobahn (2) mit einem Zugspriegel (3) und einer Antriebsvorrichtung (6, 7, 8; 14) zur Betätigung des Zugspriegels (3),
wobei
- mindestens ein Motor (6) der Antriebsvorrichtung mit dem Zugspriegel (3) fest verbunden ist, so dass er gemeinsam mit dem Zugspiegel gegenüber einem dachfesten Teil (13, 16) verschiebbar ist, und
- mindestens eine Antriebswelle (7) der Antriebsvorrichtung dazu vorgesehen ist, mit dem dachfesten Teil (13, 16) zusammenzuwirken zur Verschiebung des Zugspriegels (3) gegenüber dem dachfesten Teil (13, 16),
**dadurch gekennzeichnet, dass** zur Stromversorgung des mindestens einen Motors (6) in oder an der Rollobahn Stromzuführungsleitungen (16) derart angeordnet sind, dass sie zusammen mit der Rollobahn aufgewickelt werden.

2. Rolloanordnung nach Anspruch 1,
**dadurch gekennzeichnet, dass** die Antriebswelle (7) an ihren Endabschnitten Reibräder (8) aufweist zur Zusammenwirkung mit dem dachfesten Teil (13).

3. Rolloanordnung nach Anspruch 1,
**dadurch gekennzeichnet, dass** die Antriebswelle an ihren Endabschnitten Zahnräder (14) aufweist zur Zusammenwirkung mit einer Zahnung (15) des dachfesten Teils (13).

4. Rolloanordnung nach einem der Ansprüche 1 bis 3,
**dadurch gekennzeichnet, dass** die Antriebswelle (7) einstückig ausgebildet und der Motor mittig an dem Zugspriegel angeordnet ist.

5. Rolloanordnung nach einem der Ansprüche 1 bis 3,
**dadurch gekennzeichnet, dass** die Antriebswelle (7) zwei Halbachsen aufweist, die mit einem Getriebe verbunden sind, welches an dem Zugspriegel (3) angeordnet ist.

6. Rolloanordnung nach einem der Ansprüche 1 bis 3,
**dadurch gekennzeichnet, dass** zwei Motoren (6) vorgesehen sind zum Antrieb zweier Antriebswellen (7), die jeweils auf einer Seite der Rolloanordnung (1) zur Zusammenwirkung mit einem dachfesten Teil (13, 16) ausgebildet sind.

7. Rolloanordnung nach Anspruch 6,
**dadurch gekennzeichnet, dass** eine Steuereinheit (9) vorgesehen ist zur Ansteuerung der beiden Motoren (6) derart, dass ein synchroner Antrieb des Zugspriegels (3) ermöglicht ist.

8. Rolloanordnung nach Anspruch 6,
**dadurch gekennzeichnet, dass** eine mechanische Synchronisierung der beiden Antriebswellen (7) im Bereich des Zugspriegels (3) vorgesehen ist.

9. Rolloanordnung nach einem der Ansprüche 1 bis 8,
**dadurch gekennzeichnet, dass** die Lagerung des Zugspriegels (3) über Gleiter (11, 12) oder über die mindestens eine Antriebswelle (7) erfolgt.

10. Dachanordnung mit
- einem Rahmen (16) und
- einer Rolloanordnung (1) nach einem der Ansprüche 1 bis 9,
wobei der Rahmen Führungsschienen (13) für die Rolloanordnung (1) aufweist.

11. Dachanordnung nach Anspruch 10,
**dadurch gekennzeichnet, dass** die Führungsschienen (13) oberflächenbehandelt sind zur Verbesserung der Verbindung mit einem Reibrad (8) der Rolloanordnung (1).

## Claims

1. Roller blind arrangement (1), in particular sun roller blind arrangement for a vehicle, having a roller-blind web (2) which can be wound up and has a tension bow (3) and a drive device (6, 7, 8; 14) for actuating the tension bow (3),
- at least one motor (6) of the drive device being connected fixedly to the tension bow (3), with the result that it can be displaced jointly with the tension bow with respect to a part (13, 16) which is fixed to the roof, and
- at least one drive shaft (7) of the drive device being provided for the purpose of interacting with the part (13, 16) which is fixed to the roof for the displacement of the tension bow (3) with respect to the part (13, 16) which is fixed to the roof,
**characterized in that**, in order to supply current to the at least one motor (6), current feed lines (16) are arranged in or on the roller-blind web in such a way that they are wound up together with the roller-blind web.

2. The roller blind arrangement according to Claim 1, **characterized in that** the drive shaft (7) has friction wheels (8) at its end sections for interacting with the part (13) which is fixed to the roof.

3. The roller blind arrangement according to Claim 1, **characterized in that** the drive shaft has gearwheels (14) at its end sections for interacting with a toothing system (15) of the part (13) which is fixed to the roof.

4. The roller blind arrangement according to one of Claims 1 to 3, **characterized in that** the drive shaft (7) is configured in one piece and the motor is arranged centrally on the tension bow.

5. The roller blind arrangement according to one of Claims 1 to 3, **characterized in that** the drive shaft (7) has two half axles which are connected to a gear mechanism which is arranged on the tension bow (3).

6. The roller blind arrangement according to one of Claims 1 to 3, **characterized in that** two motors (6) are provided for driving two drive shafts (7) which are configured in each case on one side of the roller blind arrangement (1) for interacting with a part (13, 16) which is fixed to the roof.

7. The roller blind arrangement according to Claim 6, **characterized in that** a control unit (9) is provided for actuating the two motors (6) in such a way that a synchronous drive of the tension bow (3) is made possible.

8. The roller blind arrangement according to Claim 6, **characterized in that** a mechanical synchronization means of the two drive shafts (7) is provided in the region of the tension bow (3).

9. The roller blind arrangement according to one of Claims 1 to 8, **characterized in that** the tension bow (3) is mounted via glides (11, 12) or via the at least one drive shaft (7).

10. Roof arrangement having
- a frame (16) and
- a roller blind arrangement (1) according to one of Claims 1 to 9,
the frame having guide rails (13) for the roller blind arrangement (1).

11. The roof arrangement according to Claim 10, **characterized in that** the guide rails (13) are surface-treated in order to improve the connection to a friction wheel (8) of the roller blind arrangement (1).

## Revendications

1. Agencement de store (1), en particulier agencement de store pare-soleil pour un véhicule, comprenant une bande de store enroulable (2) avec une traverse de traction (3) et un dispositif d'entraînement (6, 7, 8 ; 14) pour l'actionnement de la traverse de traction (3),
- au moins un moteur (6) du dispositif d'entraînement étant connecté fixement à la traverse de traction (3) de sorte qu'il puisse être déplacé conjointement avec la traverse de traction par rapport à une partie (13, 16) fixée au toit, et
- au moins un arbre d'entraînement (7) du dispositif d'entraînement étant prévu de manière à coopérer avec la partie (13, 16) fixée au toit, pour déplacer la traverse de traction (3) par rapport à la partie (13, 16) fixée au toit,
**caractérisé en ce que** pour l'alimentation en courant de l'au moins un moteur (6), des conduites d'alimentation en courant (16) sont disposées dans ou sur la bande de store de telle sorte qu'elles soient enroulées conjointement avec la bande de store.

2. Agencement de store selon la revendication 1, **caractérisé en ce que** l'arbre d'entraînement (7) présente, sur ses portions d'extrémité, des roues de friction (8) prévues pour coopérer avec la partie (13) fixée au toit.

3. Agencement de store selon la revendication 1, **caractérisé en ce que** l'arbre d'entraînement présente, sur ses portions d'extrémité, des roues dentées (14) destinées à coopérer avec une denture (15) de la partie (13) fixée au toit.

4. Agencement de store selon l'une quelconque des revendications 1 à 3, **caractérisé en ce que** l'arbre d'entraînement (7) est réalisé d'une seule pièce et le moteur est disposé centralement sur la traverse de traction.

5. Agencement de store selon l'une quelconque des revendications 1 à 3, **caractérisé en ce que** l'arbre d'entraînement (7) présente deux demi-axes, qui sont connectés à une transmission qui est disposée sur la traverse de traction (3).

6. Agencement de store selon l'une quelconque des revendications 1 à 3, **caractérisé en ce que** deux moteurs (6) sont prévus pour l'entraînement de deux arbres d'entraînement (7) qui sont réalisés à chaque fois d'un côté de l'agencement de store (1) de manière à coopérer avec une partie (13, 16) fixée au toit.

7. Agencement de store selon la revendication 6, **caractérisé en ce qu'**une unité de commande (9) est prévue pour commander les deux moteurs (6) de telle sorte qu'un entraînement synchrone de la traverse de traction (3) soit possible.

8. Agencement de store selon la revendication 6, **caractérisé en ce qu'**une synchronisation mécanique des deux arbres d'entraînement (7) est prévue dans la région de la traverse de traction (3).

9. Agencement de store selon l'une quelconque des revendications 1 à 8, **caractérisé en ce que** le support de la traverse de traction (3) est réalisé par le biais d'éléments de glissement (11, 12) ou par le biais de l'au moins un arbre d'entraînement (7).

10. Agencement de toit, comprenant :
- un cadre (16) et
- un agencement de store (1) selon l'une quelconque des revendications 1 à 9,
le cadre présentant des rails de guidage (13) pour l'agencement de store (1).

11. Agencement de toit selon la revendication 10, **caractérisé en ce que** les rails de guidage (13) sont pourvus d'un traitement de surface pour améliorer la liaison avec une roue de friction (8) de l'agencement de store (1).
